# EUROPEAN PATENT SPECIFICATION

(11) **EP 2 620 220 B1**
(45) Date of publication and mention of the grant of the patent: **22.10.2025**
(21) Application number: 13152152.8
(22) Date of filing: 22.01.2013
(51) Int. Cl.: B02C 18/22, B02C 21/02, E01H 1/08, B02C 18/14, B02C 23/12, A01G 20/40

(54) **Shredder, particularly for street cleaning vehicles and the like**
Häcksler, insbesondere für Straßenreinigungsfahrzeug und dergleichen
Déchiqueteuse, en particulier pour des véhicules de nettoyage de rue et analogues

(30) Priority: 24.01.2012 IT PD20120020
(43) Date of publication of application: 31.07.2013
(73) Proprietor: Essepi S.N.C. di Schiavon Nicola e Pelizzaro Giovanni E C., 30010 Campolongo Maggiore (VE) (IT)
(72) Inventor: Pelizzaro, Giovanni, 35010 Vigonza (PD) (IT); Schiavon, Nicola, 35031 Abano Terme (PD) (IT)
(74) Representative: Modiano, Micaela Nadia

(56) References cited:
- WO-A1-01/64018
- WO-A1-2009/067792
- DE-A1- 4 124 682
- GB-A- 1 524 909
- US-A- 2 538 643
- US-A- 3 790 986
- US-A1- 2003 204 932

## Description

The present invention relates to a shredder, particularly for street cleaning vehicles and the like.

Nowadays, in the field of street cleaning machines, vehicles are known which are adapted for the intake of residues present on the ground, such as leaves, waste paper or other refuse.

They are provided with a container bin for the material to be collected which is provided with an aspiration device adapted to keep it in partial vacuum with respect to the external environment.

The bin is connected to at least one suction duct, which depending on the model can be flexible or non-flexible.

The duct is supported so as to have the port facing the ground to be cleaned by suction.

The port is supported by a sweeping assembly that is adapted to sweep the ground to be cleaned, in so doing conveying the material to be sucked toward the port of the duct, or ducts if there are more than one.

The sweeping assembly is generally supported by a device that is adapted to bring it close to the ground to be cleaned and to move it away, on command.

Some of these devices also have an accessory tube, which is connected to the container and is flexible in order for the port to be manually directed toward regions to be cleaned.

The intake occurs through the ducts by way of the partial vacuum effect of the container bin.

A problem particularly felt in the field of street cleaning is that of the space taken up in the bin by voluminous material to be collected, such as for example and in particular leaves, paper, pine needles, or waste paper or bottles, cans or other voluminous residues in general.

In fact these voluminous materials are extremely bulky and thus, during their accumulation in the bin, they tend to quickly fill and overload it.

Thus, the removal of voluminous residues from the streets, and specifically the removal of leaves in autumn, by way of such vehicles known today, requires frequently stopping work in order to empty the overloaded bin which, although its entire volume is full, has actually gathered only a minor quantity by weight of residue, owing to the high bulkiness of the latter, to the detriment of an efficient use of the vehicles.

The need is thus strongly felt for a solution that makes it possible to accommodate, in the bins of the vehicles known today, a greater quantity of voluminous residues, and in particular of leaves or the like, thus extending their useful working times and increasing their efficiency.

US2538643 discloses a leaf gathering disintegrator comprising a casing with inlet and outlet, a cutting mechanism including a rotor with protruding cutting blades, in which the casing has an extension to which a conduit can be attached.

US3790986 discloses a mobile mechanical raking apparatus for gathering, shredding and loading into a receptacle scattered debris both on lawns and paved surfaces.

The aim of the present invention is to provide a shredder, particularly for street cleaning vehicles and the like, which makes it possible to obtain a substantial reduction of the volume of the material sucked in and gathered in the bin of such vehicles.

Within this aim, an object of the invention is to provide a shredder that is compact and can be easily mounted on street cleaning vehicles, at each of the suction ducts with which they are provided.

Another object of the invention is to provide a shredder that can be easily actuated by the drive means of the vehicle itself on which it is mounted.

Another object of the invention is to provide a shredder that is structurally simple and easy to use, and that can be implemented at low cost.

In accordance with the invention, there if provided a vehicle for street cleaning comprising a shredder mounted thereon, as defined in the appended claims.

Further characteristics and advantages of the invention will become more apparent from the description of two preferred, but not exclusive, embodiments of the shredder according to the invention, illustrated by way of non-limiting example in the accompanying drawings wherein:
Figure 1 is a simplified diagram of a vehicle fitted with shredders, according to the invention;

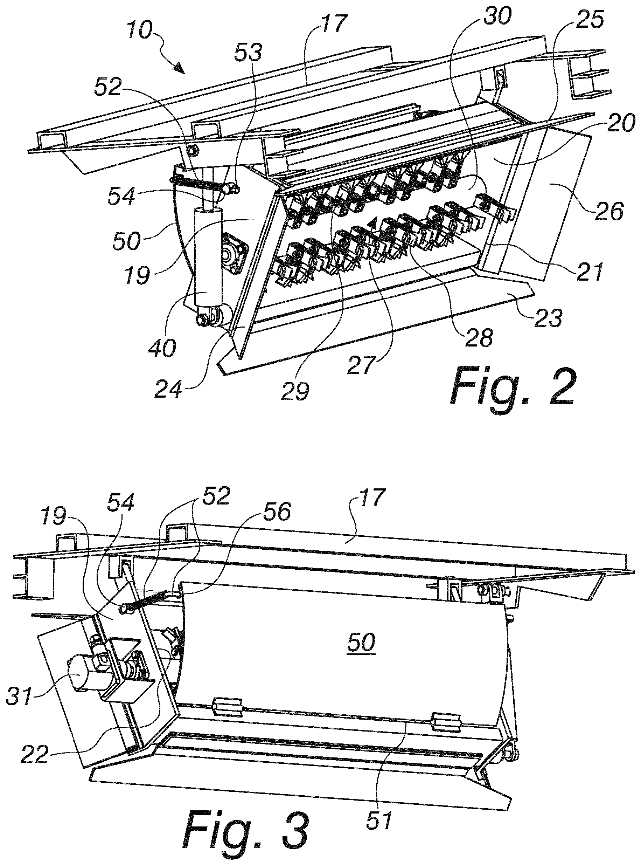

Figure 2 is a perspective view of a shredder according to the invention in a first embodiment thereof;
Figure 3 is an additional perspective view of the shredder in Figure 2;
Figure 4 is a sectional side view of a shredder as in Figures 2 and 3, in the active configuration;
Figure 5 is a side view of the shredder in Figures 2, 3 and 4, in the inactive configuration;
Figure 5a is a perspective view of a detail of a rotor of a shredder according to the invention in the first embodiment thereof;
Figure 6 is a partially sectional plan view from above of a second embodiment of a shredder according to the invention;
Figure 7 is a sectional view taken along the line VII-VII in Figure 6;

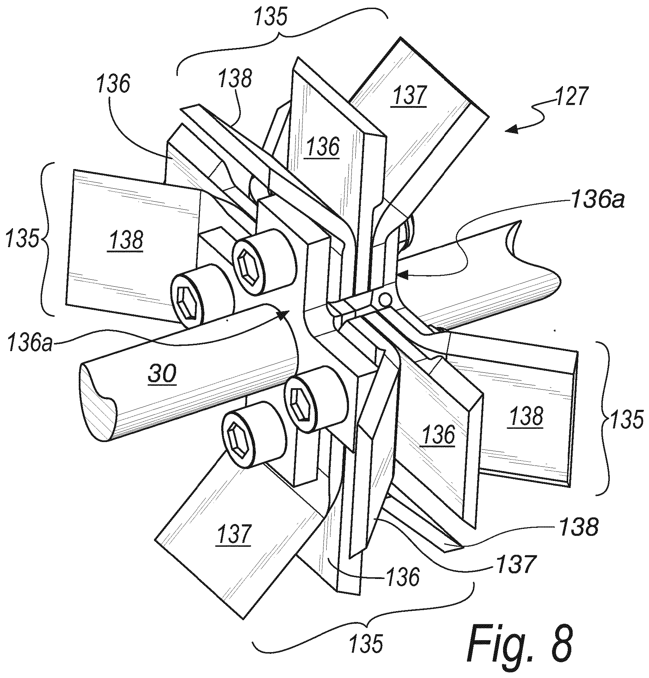

Figure 8 is an enlarged perspective view of a detail of the shredder in Figures 6 and 7, according to the invention.

With reference to the figures, a shredder, particularly for street cleaning vehicles and the like, according to the invention, is generally designated in its first embodiment with the reference numeral 10.

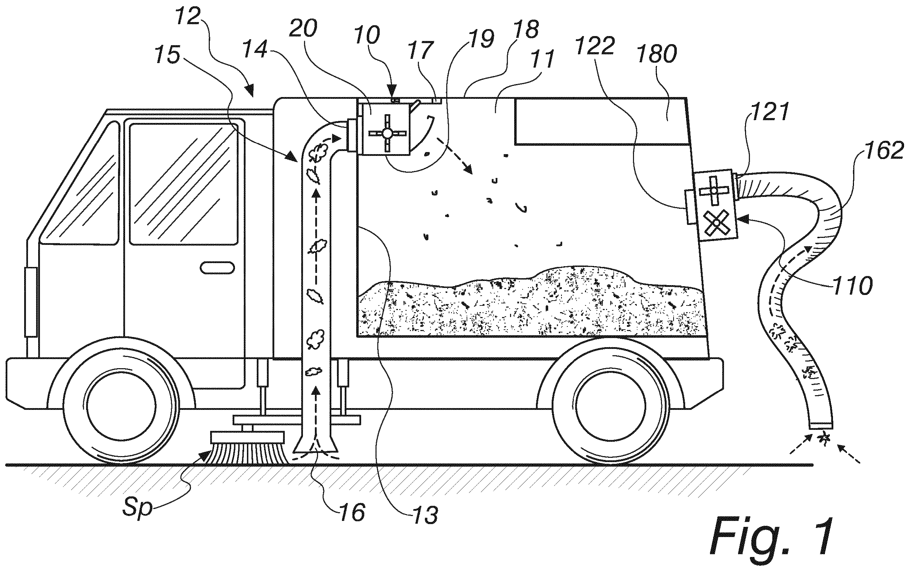

In Figure 1 the shredder 10 is shown as being fitted inside a bin 11 of a vehicle 12, which is fitted with a brush assembly SP, to be understood as being of a conventional type, for sweeping the road surface.

The shredder 10 is arranged applied to the front wall 13 of the bin 11 and facing toward the outlet 14 of a first suction duct 15, which has a substantially rectangular transverse cross-section extending substantially over all of the transverse dimension of the bin 11.

The air inlet 16 of the first suction duct 15 is arranged so as to operate proximate to the brush assembly SP.

The shredder 10 has a supporting frame 17, which is to be fixed to the top 18 of the bin 11, to which a casing 19 is pivoted.

The casing 19 forms on its inside a shredding chamber 20.

Such casing 19 has an access opening 21 for material to be shredded, which is directed toward and facing the outlet 14 of the first suction duct 15, and an opening 22 for discharging the shredded material, which is directed toward the inside of the bin 11.

The casing 19 has elements for connection to the first suction duct 15, which are constituted by four leaves 23, 24, 25, 26, made of rubber or of equivalent plastic material, which are fixed so as to extend from the corresponding edges of the access opening 21, and are adapted to be pressed against the front wall 13 of the bin 11, so as to render the joint between the port 14 of the first pipe 15 and the shredding chamber 20 hermetic.

Inside the shredding chamber 20 there is a motorized shredding rotor 27, which is interposed between the openings 21 and 22.

From the rotor 27 blades protrude, for example 28 and 29, extending so as to skim the walls of the chamber 20, in such a way as to ensure the shredding of all the material that passes through the chamber 20.

Thus, the material that passes through the chamber 20, from the access opening 21 to the discharge opening 22, is intercepted by the blades 28 and 29, which are induced to rotate by the drive shaft 30 and which shred it.

Advantageously, there is a motor 31 for actuating the drive shaft 30, which can for example be of the hydraulic type, and can thus be easily interfaced with the hydraulic circuit of the vehicle 12 on which the shredder 10 is mounted.

Naturally it is understood that the invention includes the solution whereby the motor 31 is of the electric type, or is another, functionally equivalent motor.

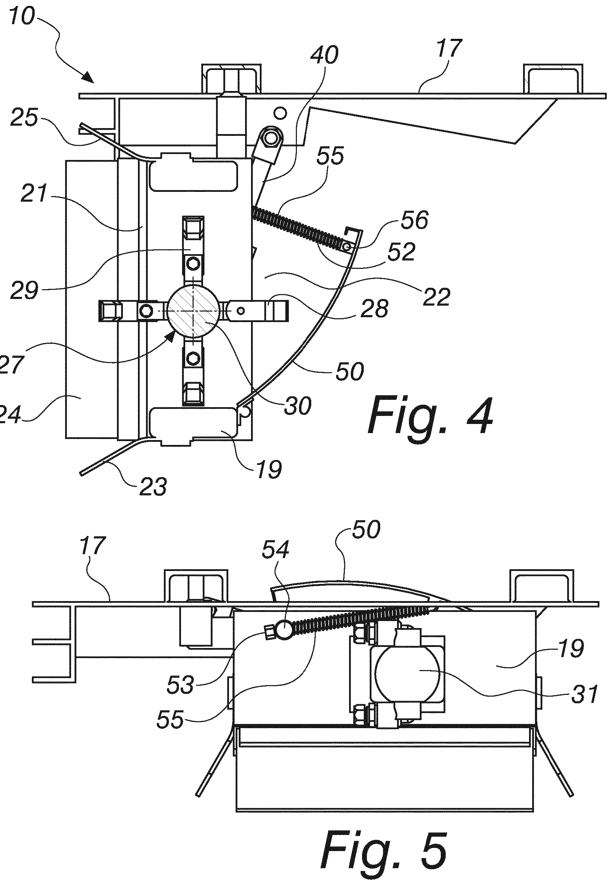

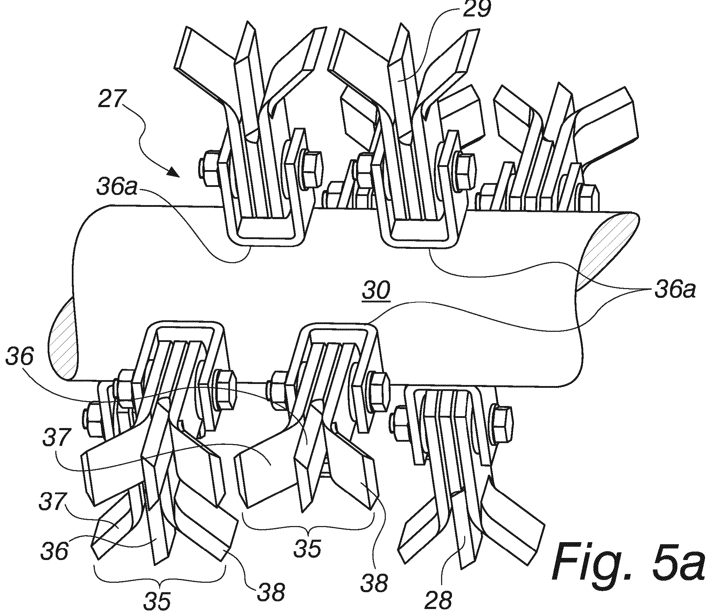

Figure 5a shows a detail of the blades 28 and 29 of the rotor 27.

Each blade 28 and 29 is part of a pack of blades 35 which are held together by a U-shaped bracket 36a which in turn is fixed to the drive shaft 30.

In the embodiment described here for the purposes of non-limiting example of the invention, each pack of blades 35 comprises a central blade 36, which is substantially straight in a radial direction with respect to the axis of the drive shaft 30, and two lateral blades 37 and 38, the lateral blades being bent so as to diverge progressively from the central blade in the direction of the axis of the drive shaft 30. The shredder 10 also has means for the rotation of the casing 19, moving the rotor 27 between a lowered active configuration, visible in Figure 4, with the access opening 21 facing and pressed against the outlet 14 of the first suction duct 15, and a raised inactive configuration, as shown in Figure 5.

The rotation means are constituted, for example, by a linear actuator 40, for example a hydraulic cylinder, which is arranged so as to operate with one end coupled to the supporting frame 17 and with the other end hinged to the casing 19.

The shredder 10 also has a deflector panel 50 which is leaf-pivoted at the lower edge 51 of the discharge opening 22.

The deflector panel 50 is advantageously concave with the concavity directed toward the discharge opening 22.

The inclination of such deflector panel 50 is adjustable for example by way of a threaded rod 52 and corresponding nut 53.

Such threaded rod 52 is pivoted at one of its ends to the deflector panel 50; the opposite end of the threaded rod passes radially through a hole in a pivot 54 that is coupled to the casing 19, in order to be screwed to the nut 53, for adjusting the degree of opening of the deflector panel with respect to the casing.

The threaded rod 52 is surrounded by a helical thrust spring 55, which is adapted to push between the pivot 54 and the hinging point 56 of the threaded rod 52 with the deflector panel 50, so as to stabilize the position, defined by the screwing of the nut 53 on the threaded rod 52, of the panel 50 with respect to the casing 19.

Such deflector panel 50 results in a certain degree of recirculation of the shredded material in the shredding chamber 20, and consequently the more the deflector panel is closed toward the discharge opening 22, the greater is the degree of shredding that is obtained in the shredding chamber 20.

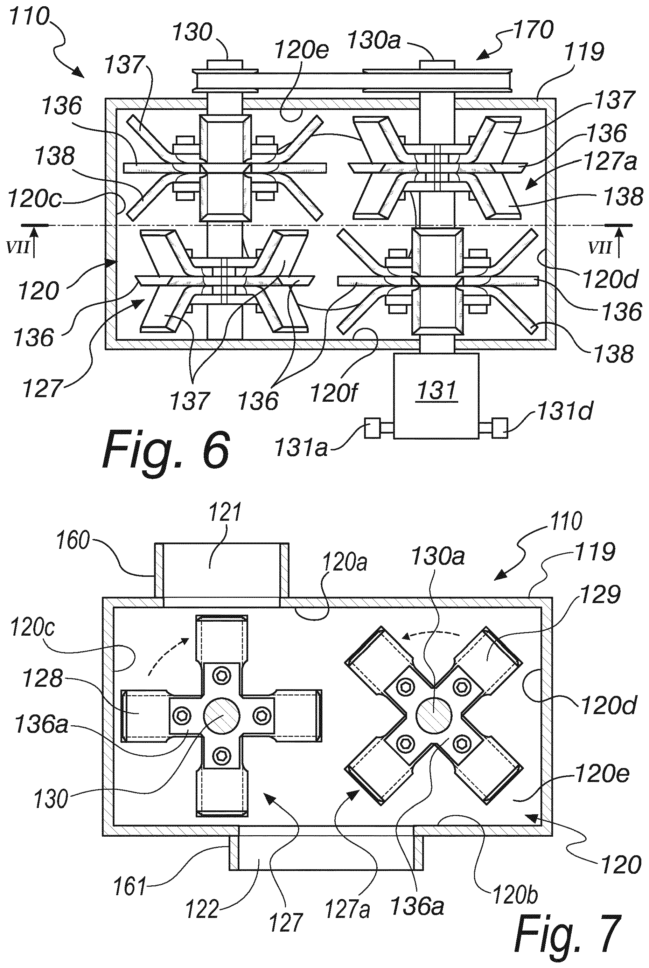

In its second embodiment, indicated in Figure 6 with the reference numeral 110, the shredder comprises
- a casing 119 which forms on its inside a shredding chamber 120 which has on a first wall 120a an access opening 121 for the material to be shredded and, on a second wall 120b, an opening 122 for discharging the shredded material,
- elements 160 and 161 for connecting the casing 119 to a second suction duct 162 of the vehicle 12,
- two motorized shredding rotors 127 and 127a, which are accommodated in the casing 119, are interposed between the openings 121 and 122 and are laterally adjacent, and provided with blades 128 and 129 that protrude from them so as to skim both the first wall 120a and the second wall 120b, and also the additional walls 120c, 120d, 120e and 120f of the chamber 120, in order to shred substantially all the material that passes through the chamber 120.

Also in such second embodiment, the shredder 110 comprises a motor 131, for actuating the rotors 127 and 127a, which is provided with elements 131a and 131b for connection to a circuit, for its power supply, of the vehicle 12 fitted with the shredder 110, in order to be driven by it.

The motor 131 is hydraulic, the circuit for actuating it being the hydraulic circuit of the vehicle 12.

Alternatively, the motor 131 is electric, the circuit for actuating it being an electric circuit connected to a source of electricity.

The access opening 121 faces a first one 127 of the rotors 127 and 127a, the discharge opening 122 facing a region which is intermediate with respect to both rotors 127 and 127a in order to receive material shredded between them.

The rotors 127 and 127a comprise shafts 130 and 130a respectively, along which pairs of flanges 136a are fixed and radially support packs 135 of blades 128 and 129 between them.

The packs 135 preferably comprise three blades, of which one is a central blade 136 and two are lateral blades 137 and 138, the lateral blades being bent so as to diverge progressively from the central blade.

The rotors 127 and 127a, preferably counter-rotating when in use, are advantageously coupled by way of a mechanical transmission 170, preferably by belt, which defines between them a transmission ratio that is substantially preset.

In the preferred, but not exclusive, embodiment of the invention described and illustrated herein, the rotors 127 and 127a are two in number, are laterally adjacent in the casing 119, but in alternative and substantially equivalent embodiments of the invention there can be more than two rotors which can be laterally adjacent in various ways depending on the contingent requirements of use.

A first one 130a of the rotors is conveniently coupled to the motor 131, and in order to be moved, the second one 130 of the rotors, when in use, receives a torque from the first rotor by way of the mechanical transmission 170.

The openings 121 and 122 advantageously have a diameter of aperture that is substantially comprised between 100 mm and 400 mm.

Preferably, the shredder, both 10 and 110, comprises means of actuation of the motor 31 and 131, which are conventional and not shown in the accompanying figures, and which at least have a button for starting the motor 31 and 131 and a button for stopping the motor, the latter in particular being adapted to stop it under emergency conditions.

With particular reference to Figure 1, the subject matter of the present invention is understood to be a street cleaning vehicle 12, which is provided with a brush assembly SP for sweeping the road surface, and which supports a collection bin 11 with a first, front shredder 10, as described above, which is associated with a first suction duct 15 having a substantially rectangular transverse cross-section, and a second, rear shredder 110, as described above, which is associated with a second suction duct 162, which is flexible and can be handled by an operator.

The inside of the bin 11 is kept in partial vacuum by a suction assembly 180.

According to the contingent requirements, a vehicle 12 can be equally fitted with shredders according to the invention which are installed inside or outside the bin.

In practice it has been found that the invention fully achieves the intended aim and objects by providing a shredder, particularly for street cleaning vehicles and the like, which makes it possible to achieve an effective reduction in the volume of voluminous material sucked in and gathered in the bin of such vehicles.

A shredder according to the invention is compact and can be easily mounted on street cleaning vehicles, at each of the suction ducts with which they are provided.

Also, a shredder according to the invention can be easily actuated by the drive means of the vehicle on which it is fitted, for example by the hydraulic circuit driven by the internal combustion engine of the vehicle.

A shredder according to the invention is also structurally simple and easy to use, and can be produced at low cost.

The invention, thus conceived, is susceptible of numerous modifications and variations, all of which are within the scope of the appended claims.

In practice the materials employed, provided they are compatible with the specific use, and the contingent dimensions and shapes, may be any according to requirements and to the state of the art.

Reference is made to the disclosures in Italian Patent Application No. PD2012A000020

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A shredder (10, 110) configured to be mounted on a vehicle (12) for street cleaning, the vehicle having a suction duct (15, 162) provided with an outlet (14), the shredder comprising
- a casing (19, 119) which forms on its inside a shredding chamber (20, 120) which has an access opening (21, 121) for material to be shredded and an opening (22, 122) for discharging the shredded material,
- elements (23, 24, 25, 26, 160, 161) configured to connect the casing (19, 119) to said suction duct (15, 162) of the vehicle (12) for street cleaning, for the passage of the material aspirated by the suction duct (15, 162) through the chamber (20, 120) to be shredded therein,
- at least one motorized shredding rotor (27, 127, 127a) which is accommodated in the casing (19, 119), is interposed between said access and discharge openings (21, 22, 121, 122) and is provided with blades (28, 29, 128, 129) that protrude from them so as to skim the walls of said chamber (20, 120) in order to shred substantially all the material that passes through the chamber (20, 120), **characterized in that** it further comprises rotation means for the rotation of said casing (19), which supports the rotor (27), between a lowered active configuration, in which the access opening (21) faces and is pressed against said outlet (14) of said suction duct (15), and a raised inactive configuration, away from said outlet (14).

2. The shredder according to claim 1, **characterized in that** there is a motor (31, 131) for actuating the drive shaft (30, 130, 130a) of the rotor (27, 127, 127a), which is of the hydraulic type and is configured to be interfaced with the hydraulic circuit of the vehicle (12) on which the shredder (10, 110) is configured to be mounted.

3. The shredder according to claim 2, **characterized in that** said motor (31, 131) is of the electric type or is another functionally equivalent motor.

4. The shredder according claim 2, **characterized in that** each blade (28, 29, 128, 129) is part of a pack of blades (35, 135) which are held together by a U-shaped bracket (36a) or by a pair of flanges (136a), which in turn is or are fixed to the drive shaft (30, 130, 130a).

5. The shredder according to claim 4, **characterized in that** each pack of blades (35, 135) comprises a central blade (36, 136), which is substantially straight in a radial direction with respect to the axis of the drive shaft (30, 130, 130a), and two lateral blades (37, 38, 137, 138), the lateral blades being bent so as to diverge progressively from the central blade in the direction of the axis of said drive shaft.

6. The shredder according to one or more of the preceding claims, **characterized in that** said elements configured for connecting the casing (19, 119) to said suction duct (15) of the vehicle are constituted by four leaves (23, 24, 25, 26), made of rubber or of equivalent plastic material, which are fixed so as to extend from corresponding edges of said access opening (21), and are adapted to be pressed against a front wall (13) of a bin (11) of said cleaning vehicle (12), so as to render a joint between the outlet (14) of the suction duct (15) and the shredding chamber (20) hermetic.

7. The shredder according to one or more of the preceding claims, **characterized in that** said rotation means are constituted by at least one linear actuator (40), for example a hydraulic cylinder, which is arranged so as to operate with one end coupled to a supporting frame (17) configured to be fixed to the top (18) of the bin (11) of said cleaning vehicle (12) and with the other end hinged to the casing (19).

8. The shredder according to one or more of the preceding claims, **characterized in that** it has a deflector panel (50) which is hinged along one edge at the lower edge (51) of the discharge opening (22).

9. The shredder according claim 8, **characterized in that** the inclination of said deflector panel (50) is adjustable for example by way of a threaded rod (52) and a corresponding nut (53), said threaded rod being pivoted at one of its ends to said deflector panel (50), the opposite end passing radially through a hole in a pivot (54) to be screwed to said nut (53), for adjusting the degree of opening of said deflector panel.

10. The shredder according to one or more of the preceding claims, **characterized in that** it comprises two shredding rotors (127, 27a).

11. The shredder according to claim 10, **characterized in that** said access opening (121) faces a first one (127) of said rotors (127, 127a), said discharge opening (122) facing a region which is intermediate with respect to said rotors (127, 127a) in order to receive material shredded between them.

12. The shredder according to claim 11, **characterized in that** said rotors (127, 127a) are coupled by way of a mechanical transmission (170) which defines between them a preset transmission ratio.

13. A vehicle for street cleaning provided with a brush assembly (SP) for sweeping the road surface and supporting a collection bin (11) which is kept on its inside in a partial vacuum by a suction assembly (180), and with a first, front said shredder (10), according to the preceding claims, associated with a first suction duct (15) having a substantially rectangular transverse cross-section and a second, rear said shredder (110), according to the preceding claims, associated with a second suction duct (162) which is flexible and can be handled by an operator.

## Patentansprüche

1. Ein Häcksler (10, 110), ausgebildet, um an einem Straßenreinigungsfahrzeug (12) montiert zu werden, wobei das Fahrzeug eine mit einem Auslass (14) versehene Ansaugleitung (15, 162) hat; wobei der Häcksler Folgendes umfasst:
- ein Gehäuse (19, 119), das in seinem Inneren eine Häckslerkammer (20, 120) bestimmt, welche eine Zugangsöffnung (21, 121) für zu häckselndes Material und eine Öffnung (22, 122) zum Ablassen des gehäckselten Materials hat,
- Elemente (23, 24, 25, 26, 160, 161), ausgebildet, um das Gehäuse (19, 119) mit der Ansaugleitung (15, 162) des Straßenreinigungsfahrzeugs zu verbinden, zum Zwecke des Durchlaufs des Materials, das von der Ansaugleitung (15, 162) angesaugt wurde, durch die Kammer (20, 120), um darin gehäckselt zu werden,
- mindestens einen motorisierten Häckslerrotor (27, 127, 127a), der in dem Gehäuse (19, 119) untergebracht ist, zwischen der Zugangs- und der Ablassöffnung (21, 22, 121, 122) angeordnet und mit Flügeln (28, 29, 128, 129) ausgestattet ist, die von ihnen vorstehen, um die Wände der Kammer (20, 120) entlangzustreichen, um im Wesentlichen alles Material, das die Kammer (20, 120) durchläuft, zu häckseln;
**dadurch gekennzeichnet, dass** er weiter Rotationsmittel für die Drehung des Gehäuses (19), das den Rotor (27) trägt, zwischen einer abgesenkten aktiven Konfiguration, in welcher die Zugangsöffnung (21) dem Auslass (14) der Ansaugleitung (15) zugewandt und gegen sie gepresst ist, und einer angehobenen inaktiven Konfiguration, fort von dem Auslass (14), umfasst.

2. Der Häcksler gemäß Anspruch 1, **dadurch gekennzeichnet, dass** es einen Motor (31, 131) zum Betätigen der Antriebswelle (30, 130, 130a) des Rotors (27, 127, 127a) gibt, der vom hydraulischen Typ und ausgebildet ist, um mit dem Hydraulikkreis des Fahrzeugs (12) verbunden zu werden, auf welchem der Häcksler (10, 110) montiert zu werden ausgebildet ist.

3. Der Häcksler gemäß Anspruch 2, **dadurch gekennzeichnet, dass** der Motor (31, 131) vom elektrischen Typ oder ein anderer funktionell gleichwertiger Motor ist.

4. Der Häcksler gemäß Anspruch 2, **dadurch gekennzeichnet, dass** jeder Flügel (28, 29, 128, 129) Teil einer Gruppe von Flügeln (35, 135) ist, die von einer U-förmigen Klammer (36a) oder von einem Paar von Hanges (136a) zusammengehalten wird, die/das wiederum an der Antriebswelle (30, 130, 130a) befestigt ist/sind.

5. Der Häcksler gemäß Anspruch 4, **dadurch gekennzeichnet, dass** jede Gruppe von Flügeln (35, 135) einen zentralen Flügel (36, 136) umfasst, der im Wesentlichen in einer radialen Richtung mit Bezug auf die Achse der Antriebswelle (30, 130, 130a) gerade ist, und zwei seitliche Flügel (37, 38, 137, 138), wobei die seitlichen Flügel gebogen sind, um sich zunehmend vom zentralen Flügel in Richtung der Achse der Antriebswelle zu verzweigen.

6. Der Häcksler gemäß einem oder mehreren der obigen Ansprüche, **dadurch gekennzeichnet, dass** die Elemente, die zur Verbindung des Gehäuses (19, 119) mit der Ansaugleitung (15) des Fahrzeugs ausgebildet sind, aus vier Flügeln (23, 24, 25, 26) bestehen, die aus Gummi oder gleichwertigem Kunststoffmaterial hergestellt sind, die so befestigt sind, dass sie sich von entsprechenden Kanten der Zugangsöffnung (21) erstrecken, und die ausgebildet sind, um gegen eine Vorderwand (13) eines Behälters (11) des Reinigungsfahrzeugs (12) gepresst zu werden, um eine Verbindung zwischen dem Auslass (14) der Ansaugleitung (15) und der Häckslerkammer (20) hermetisch zu machen.

7. Der Häcksler gemäß einem oder mehreren der obigen Ansprüche, **dadurch gekennzeichnet, dass** die Rotationsmittel in mindestens einem Linearaktor (40), zum Beispiel einem Hydraulikzylinder, bestehen, der angeordnet ist, um mit einem Ende an einen Tragrahmen (17) gekoppelt zu arbeiten, konfiguriert, um am oberen Ende (18) des Behälters (11) des Reinigungsfahrzeugs (12) befestigt zu werden, und mit dem anderen Ende gelenkig mit dem Gehäuse (19) verbunden.

8. Der Häcksler gemäß einem oder mehreren der obigen Ansprüche, **dadurch gekennzeichnet, dass** er ein Ablenkblech (50) hat, welches schwenkbar entlang einer Kante an der Unterkante (51) der Ablassöffnung (22) angebracht ist.

9. Der Häcksler gemäß Anspruch 8, **dadurch gekennzeichnet, dass** die Neigung des Ablenkblechs (50) zum Beispiel mit Hilfe einer Gewindestange (52) und einer entsprechenden Mutter (53) verstellbar ist, wobei die Gewindestange an einem ihrer Enden schwenkbar mit dem Ablenkblech (50) verbunden ist, wobei das gegenüberliegende Ende radial durch ein Loch in einem Drehzapfen (54) verläuft, der mit der Mutter (53) verschraubt werden soll, um den Öffnungsgrad des Ablenkblechs einzustellen.

10. Der Häcksler gemäß einem oder mehreren der obigen Ansprüche, **dadurch gekennzeichnet, dass** er zwei Häckslerrotoren (127, 27a) umfasst.

11. Der Häcksler gemäß Anspruch 10, **dadurch gekennzeichnet, dass** die Zugangsöffnung (121) einem ersten (127) der Rotoren (127, 127a) zugewandt ist, wobei die Ablassöffnung (122) einem Bereich zugewandt ist, der zwischen den Rotoren (127, 127a) liegt, um Material, das zwischen ihnen gehäckselt wurde, aufzunehmen.

12. Der Häcksler gemäß Anspruch 11, **dadurch gekennzeichnet, dass** die Rotoren (127, 127a) über ein mechanisches Getriebe (170) gekoppelt sind, welches zwischen ihnen ein vordefiniertes Übertragungsverhältnis bestimmt.

13. Ein Straßenreinigungsfahrzeug, ausgestattet mit einem Bürstenaufbau (SP) zum Wischen der Straßenoberfläche und Tragen eines Sammelbehälters (11), der in seinem Inneren von einem Ansaugaufbau (180) unter Unterdruck gehalten wird, und mit dem ersten, vorderen Häcksler (10), gemäß den obigen Ansprüchen, verbunden mit einer ersten Ansaugleitung (15), mit einem im Wesentlichen rechteckigen transversalen Querschnitt, und dem zweiten, hinteren Häcksler (110), gemäß den obigen Ansprüchen, verbunden mit einer zweiten Ansaugleitung (162), die biegsam ist und von einem Bediener gehandhabt werden kann.

## Revendications

1. Une déchiqueteuse (10, 110) destinée à être montée sur un véhicule (12) de nettoyage de rue, le véhicule comportant un conduit d'aspiration (15, 162) muni d'une sortie (14), la déchiqueteuse comprenant
- un boîtier (19, 119) qui forme à l'intérieur une chambre de broyage (20, 120) qui comporte une ouverture d'accès (21, 121) pour les matériaux à broyer et une ouverture (22, 122) pour évacuer les matériaux broyés,
- des éléments (23, 24, 25, 26, 160, 161) configurés pour relier le boîtier (19, 119) audit conduit d'aspiration (15, 162) du véhicule (12) de nettoyage de rue, pour le passage du matériau aspiré par le conduit d'aspiration (15, 162) à travers la chambre (20, 120) afin d'y être broyé,
- au moins un rotor de broyage motorisé (27, 127, 127a) qui est logé dans le boîtier (19, 119), est interposé entre lesdites ouvertures d'accès et de décharge (21, 22, 121, 122) et est muni de lames (28, 29, 128, 129) qui font saillie à partir de celles-ci de manière à racler les parois de ladite chambre (20, 120) afin de broyer sensiblement tout le matériau qui passe à travers la chambre (20, 120), **caractérisé en ce qu'**elle comprend en outre des moyens de rotation pour faire tourner ledit boîtier (19), qui supporte le rotor (27), entre une configuration active abaissée, dans laquelle l'ouverture d'accès (21) fait face et est pressée contre ladite sortie (14) dudit conduit d'aspiration (15), et une configuration inactive relevée, éloignée de ladite sortie (14).

2. La déchiqueteuse selon la revendication 1, **caractérisée en ce qu'**elle comprend un moteur (31, 131) pour actionner l'arbre d'entraînement (30, 130, 130a) du rotor (27, 127, 127a), qui est de type hydraulique et est configuré pour être interfacé avec le circuit hydraulique du véhicule (12) sur lequel la déchiqueteuse (10, 110) est configurée pour être montée.

3. La déchiqueteuse selon la revendication 2, **caractérisée en ce que** ledit moteur (31, 131) est de type électrique ou est un autre moteur fonctionnellement équivalent.

4. La déchiqueteuse selon la revendication 2, **caractérisée en ce que** chaque lame (28, 29, 128, 129) fait partie d'un ensemble de lames (35, 135) qui sont maintenues ensemble par un support en forme de U (36a) ou par une paire de supports (136a), qui à leur tour sont fixés à l'arbre d'entraînement (30, 130, 130a).

5. La déchiqueteuse selon la revendication 4, **caractérisée en ce que** chaque paquet de lames (35, 135) comprend une lame centrale (36, 136), qui est sensiblement droite dans une direction radiale par rapport à l'axe de l'arbre d'entraînement (30, 130, 130a), et deux lames latérales (37, 38, 137, 138), les lames latérales étant courbées de manière à diverger progressivement de la lame centrale dans la direction de l'axe dudit arbre d'entraînement.

6. La déchiqueteuse selon une ou plusieurs des revendications précédentes, **caractérisée en ce que** lesdits éléments configurés pour relier le boîtier (19, 119) audit conduit d'aspiration (15) du véhicule sont constitués par quatre lames (23, 24, 25, 26), en caoutchouc ou en matière plastique équivalente, qui sont fixées de manière à s'étendre à partir des bords correspondants de ladite ouverture d'accès (21) et sont adaptées pour être pressées contre une paroi avant (13) d'un bac (11) dudit véhicule de nettoyage (12), de manière à rendre étanche le joint entre la sortie (14) du conduit d'aspiration (15) et la chambre de broyage (20).

7. La déchiqueteuse selon l'une ou plusieurs des revendications précédentes, **caractérisée en ce que** lesdits moyens de rotation sont constitués par au moins un actionneur linéaire (40), par exemple un vérin hydraulique, qui est agencé de manière à fonctionner avec une extrémité couplée à un châssis de support (17) configuré pour être fixé à la partie supérieure(18) du bac (11) dudit véhicule de nettoyage (12) et l'autre extrémité articulée sur le boîtier (19).

8. La déchiqueteuse selon l'une ou plusieurs des revendications précédentes, **caractérisée en ce qu'**elle comporte un panneau déflecteur (50) qui est articulé le long d'un bord au niveau du bord inférieur (51) de l'ouverture de décharge (22).

9. La déchiqueteuse selon la revendication 8, **caractérisée en ce que** l'inclinaison dudit panneau déflecteur (50) est réglable, par exemple au moyen d'une tige filetée (52) et d'un écrou correspondant (53), ladite tige filetée étant pivotée à l'une de ses extrémités sur ledit panneau déflecteur (50), l'extrémité opposée passant radialement à travers un trou dans un pivot (54) destiné à être vissé à l'écrou (53), afin de régler le degré d'ouverture dudit panneau déflecteur.

10. La déchiqueteuse selon une ou plusieurs des revendications précédentes, **caractérisée en ce qu'**elle comprend deux rotors de broyage (127, 27a).

11. La déchiqueteuse selon la revendication 10, **caractérisée en ce que** ladite ouverture d'accès (121) fait face à un premier (127) desdits rotors (127, 127a), ladite ouverture de décharge (122) faisant face à une région intermédiaire par rapport auxdits rotors (127, 127a) afin de recevoir les matériaux broyés entre ceux-ci.

12. La déchiqueteuse selon la revendication 11, **caractérisée en ce que** lesdits rotors (127, 127a) sont couplés par l'intermédiaire d'une transmission mécanique (170) qui définit entre eux un rapport de transmission prédéfini.

13. Véhicule de nettoyage de rue muni d'un ensemble de brosses (SP) pour balayer la surface de la rue et supportant un bac de collecte (11) qui est maintenu à l'intérieur dans un vide partiel par un ensemble d'aspiration (180), et avec une première déchiqueteuse (10) à l'avant selon les revendications précédentes,
associée à un premier conduit d'aspiration (15) ayant une section transversale sensiblement rectangulaire et une deuxième déchiqueteuse arrière (110), selon les revendications précédentes,
associée à un deuxième conduit d'aspiration (162) qui est flexible et peut être manipulé par un opérateur.
